# FASCICULE DE BREVET EUROPEEN

(11) **EP 3 639 345 B1**
(45) Date de publication et mention de la délivrance du brevet: **06.08.2025**
(21) Numéro de dépôt: 18773502.2
(22) Date de dépôt: 12.06.2018
(51) Int. Cl.: H02J 7/00

(54) **SYSTÈME DE STOCKAGE D'ÉNERGIE ÉLECTRIQUE POUR AÉRONEF**
STROMSPEICHERSYSTEM FÜR EIN FLUGZEUG
ELECTRICAL ENERGY STORAGE SYSTEM FOR AN AIRCRAFT

(30) Priorité: 13.06.2017 FR 1755299
(43) Date de publication de la demande: 22.04.2020
(73) Titulaire: Safran Electrical & Power, 31702 Blagnac Cedex (FR)
(72) Inventeur: DESHAYES, Olivier, 93100 Montreuil (FR)
(74) Mandataire: Casalonga
(86) Numéro de dépôt international: PCT/FR2018/051374
(87) Numéro de publication internationale: WO 2018/229422

(56) Documents cités:
- WO-A1-2014/180662
- FR-A1- 2 951 320
- US-A1- 2008 174 928
- US-A1- 2009 021 874
- US-A1- 2014 167 655

## Description

L'invention concerne un système de stockage d'énergie électrique pour aéronef et un ensemble de distribution d'énergie électrique comprenant un tel système.

Un aéronef possède en général un système électrique comprenant un circuit de distribution primaire d'énergie électrique et un circuit de distribution secondaire d'énergie électrique. Lesdits circuits de distribution primaire et secondaire, aussi appelés « boîtiers de distribution primaire ou secondaire », permettent de protéger et de distribuer la puissance électrique provenant de sources internes, telles que des générateurs ou des batteries, ou de sources externes, telles que des unités de puissance, vers des charges utiles ou vers d'autres boîtiers de distribution de l'aéronef.

Il est ainsi connu des sources internes comprenant des batteries de type Li-Ion comprenant des cartes électroniques, des éléments de coupure, comme des contacteurs, et des fusibles.

Un élément de coupure, tel qu'un contacteur, relié à la batterie permet de protéger ladite batterie en l'isolant électriquement.

Cependant, une telle architecture ne permet pas d'optimiser la gestion de la batterie et de manière générale du système de stockage d'énergie électrique.

Il existe donc un besoin de fournir un système de stockage d'énergie électrique pour aéronef efficace et ne présentant pas les inconvénients précités. Des exemples d'art antérieur sont les documents suivants: FR2951320 ; US2014167655 ; et WO2014180662.

Selon un premier aspect, l'invention a pour objet un système de stockage d'énergie électrique pour aéronef comprenant au moins une batterie comportant une pluralité de modules de cellules de batterie reliées entre eux au moyen d'un élément de coupure secondaire propre à chaque module de sorte à former la au moins une batterie. De plus, au moins un des éléments de coupure est un contacteur de type SSPC.

Grâce à l'invention, la gestion de la au moins une batterie est optimisée.

En effet, la gestion de la batterie se fait par la gestion de l'ensemble des modules formant la batterie. Ainsi, les étapes de maintenance et de réparation sont simplifiées grâce à l'aspect modulaire de l'invention ce qui engendre un gain de coût. La sécurité est renforcée car la batterie peut continuer à fonctionner en isolant tout module présentant un défaut. La charge et la pré-charge de chaque module est également optimisée. Il est même possible de supprimer l'étape de pré-charge des modules.

Des modes particuliers de l'invention sont définis dans les revendications dépendantes.

D'autres buts, caractéristiques et avantages de l'invention apparaîtront à la lecture de la description suivante, donnée uniquement à titre d'exemple non limitatif et faite en référence aux dessins annexés sur lesquels :

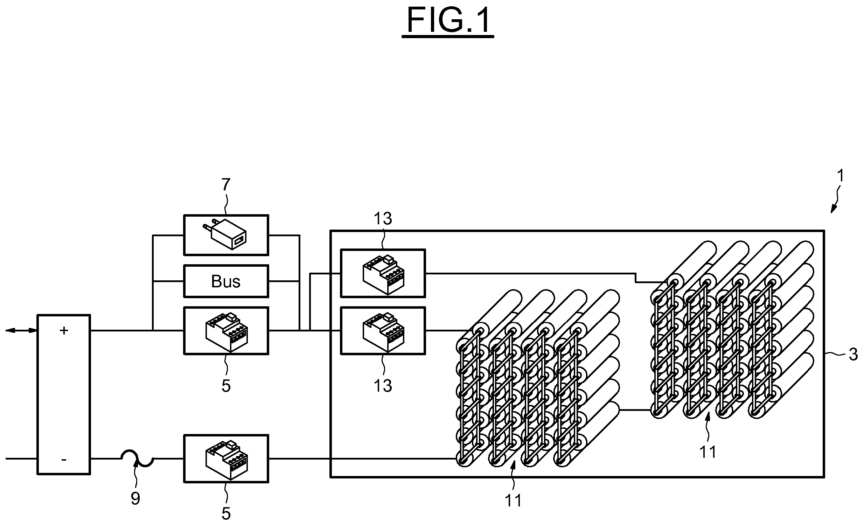

- la figure 1 est un schéma d'un mode de réalisation d'un ensemble de distribution selon l'invention ;
- la figure 2 est un schéma d'un autre mode de réalisation d'un ensemble selon l'invention.

Comme illustré sur les figures, l'ensemble de distribution d'énergie électrique de l'invention 1 comprend au moins un système de stockage d'énergie électrique 3 et au moins un élément de coupure 5 principal apte à isoler électriquement ledit système 3.

Le ou les éléments de coupure principale 5 permettent de gérer les protections et l'isolation électrique du système de stockage 3. En particulier, le ou les éléments de coupure permettent de protéger vis-à-vis d'un court-circuit les éléments de liaison, tels que les câbles, reliant les éléments de l'ensemble de l'invention 1 entre eux.

Le ou les éléments de coupure principale 5 peuvent être dimensionnés aux courants nominaux traversant le système de stockage 3.

Selon l'invention, le ou les éléments de coupure sont un ou plusieurs contacteurs de type Solid State Power Controller, dits « SSPC ». Ledit un ou plusieurs contacteurs SSPC peut être intégré et géré par une carte électronique dite « maitre » pouvant gérer d'autres fonctions de l'ensemble de l'invention 1.

Un des éléments de coupures 5 peut être associé à un élément fusible 9. Ledit élément fusible 9 peut être calibré pour protéger le système de stockage 3 de l'invention d'un court-circuit.

Le système de stockage de l'invention 3 peut être connecté à un chargeur 7 ou à plusieurs chargeurs destinés à charger électriquement ledit système de stockage 3.

Le chargeur 7 peut être de manière avantageuse connecté en parallèle d'un élément de coupure principal 5.

Le système de stockage 3 de l'invention permet de stocker de l'énergie électrique pour alimenter des charges (non représentées) dans un aéronef (non représenté) par l'intermédiaire de l'ensemble de l'invention.

Le système de stockage 3 de l'invention comprend ainsi au moins une batterie comportant une pluralité de modules 11 comprenant des cellules de batterie reliées entre elles au moyen d'un élément de coupure secondaire 13 propre à chaque module 11 de sorte à former la au moins une batterie.

Les modules 11 peuvent être reliés entre eux en série et/ou en parallèle. En fonction de l'architecture choisie, il est de manière avantageuse possible de réaliser un vol avec un ensemble de distribution de l'invention 1 présentant un nombre différent de modules 11 si l'énergie requise pour ledit vol est inférieure à la capacité maximale du système de l'invention 3. Il est donc possible de diminuer la masse de l'aéronef pour avoir de meilleures performances. L'invention présente donc l'avantage d'une modularité pouvant être réalisée de manière simple et efficace.

De manière avantageuse, le système de l'invention 3 peut limiter le courant circulant en déconnectant un ou plusieurs modules 11.

Pour ce faire, le système de l'invention 3 peut comprendre un interrupteur pour déconnecter module par module ou utiliser l'élément de coupure principal 5 pour déconnecter l'ensemble des modules.

Selon l'invention, au moins un des éléments de coupure 13 est un contacteur de type Solid State Power Controller, dit « SSPC ». Ledit contacteur SSPC ne permet pas de couper le courant entrant dans le module. Il permet de connecter les modules 11 non chargés avant la commutation du système de l'invention 3 par le ou les éléments de coupure principaux 5. Ainsi, de manière avantageuse, les éléments de coupure secondaires 13 sont dimensionnés aux courants nominaux traversant lesdits modules 11.

En outre, en fonctionnement de charge, un contacteur SSPC par l'intermédiaire de sa résistance interne permet de gérer le courant traversant le module. Ceci permet un gain de temps de charge du système de l'invention, un ralentissement du vieillissement du module et une diminution de la dégradation des cellules. La performance, le coût et la sécurité du système de l'invention en sont améliorés.

De préférence, au moins un des éléments de coupure 13 est disposé dans le module 11 propre audit élément de coupure 13. Une telle configuration permet une étape de maintenance réalisée de manière plus sécuritaire par l'opérateur. La sécurité est ainsi améliorée

De préférence, le système de l'invention 3 comprend un moyen de communication ou d'envoi d'information (non représenté) configuré pour envoyer une information de délestage hors du système de l'invention 3 lorsqu'au moins un module 11 est chargé ou surchargé. Ceci permet de réduire la consommation dudit système de l'invention 3.

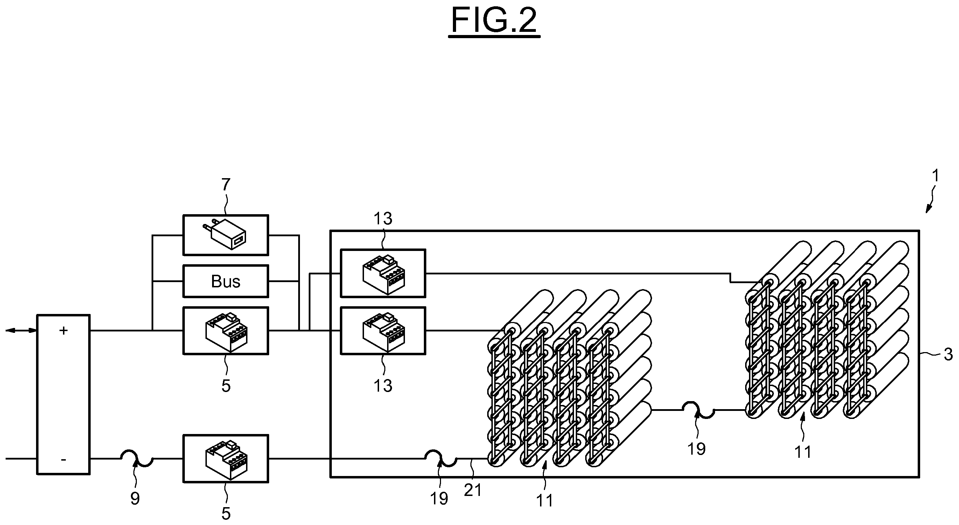

Comme représenté sur la figure 2, au moins un module 11 est protégé par un élément fusible 19.

Les éléments fusibles 19 peuvent être disposés en série de l'ensemble des modules 11 disposés en parallèle afin de protéger l'ensemble du système de stockage 3.

Ledit élément fusible 19 peut être, typiquement un câble, permettant de relier ledit système de l'invention 3 aux autres éléments de l'ensemble de l'invention 1.

Ledit élément fusible 19 peut être calibré au niveau de la puissance du module 11 et d'un élément de liaison 21 choisi, typiquement un câble, permettant de relier ledit système de l'invention 3 aux autres éléments de l'ensemble de l'invention 1. Ledit élément fusible 19 réalise ainsi la protection de chaque module 11. L'ensemble formé par l'élément fusible, 19, les modules 11 est l'élément de coupure 13 disposés en série est monté en parallèle afin de réaliser le système de stockage 3. Le nombre de branchement en parallèle peut dépendre de la puissance attendue.

De préférence, le système de l'invention 3 comprend au moins un élément de liaison 21 ayant une section transversale telle que le ratio du courant de charge en fonction du nombre de modules est optimisé. Autrement dit, l'élément de liaison 19 de chaque module peut être calibré au maximum du gabarit courant de la charge et du nombre de modules.

Ainsi, de manière avantageuse, la section des éléments de liaison de chaque module est réduite. Ceci permet de réduire les coûts par la réduction de la section de l'élément de liaison et du calibre du fusible, de faciliter l'intégration des éléments de liaison et donc de l'aéronef et de limiter la masse. En outre, en cas de délestage des charges, les coupures de tension sont évitées.

En fonctionnement, lors de la pré-charge, le système de l'invention 3 peut connecter un seul module 11. Les capacités des autres modules se chargent alors à courant limité via ledit seul module.

La commutation des autres modules chargés se fait à un courant sensiblement nul. De ce fait, la pré-charge de tous les modules peut être de manière avantageuse supprimée permettant un gain de coût et de masse.

De même en fonctionnement de charge, le système de l'invention peut optimiser la charge des modules en chargeant module par module. Ainsi le système de l'invention peut choisir de commencer la charge par le module le plus déchargé, le moins déchargé ou en parallèle.

Lors d'une maintenance d'un module, le système de l'invention peut réaliser une charge simplement sur le ou les modules chargés.

En outre, ledit système de l'invention permet de tester unitairement et d'isoler un module défectueux.

Pour ce faire, en cas de défaut détecté en fonctionnement, une interruption d'un l'élément de coupure principal est nécessaire pour déconnecter ledit module défectueux. Une telle commutation rapide permet de réaliser cette action sans impacter le fonctionnement de l'aéronef puisque le système de l'invention peut continuer à fonctionner malgré la déconnection dudit module.

## Revendications

1. Système de stockage (3) d'énergie électrique pour aéronef comprenant au moins une batterie comportant une pluralité de modules (11) de cellules de batterie reliées entre eux au moyen d'un élément de coupure secondaire (13) propre à chaque module (11) de sorte à former la au moins une batterie, au moins un des éléments de coupure (13) étant un contacteur de type SSPC.

2. Système (3) selon la revendication 1, dans lequel au moins un des éléments de coupure (13) est disposé dans le module (11) de batterie propre audit élément de coupure (13).

3. Système (3) selon l'une quelconque des revendications précédentes, dans lequel au moins un module (11) est protégé par un élément fusible (19).

4. Système (3) selon l'une quelconque des revendications précédentes, comprenant un moyen de communication configuré pour envoyer une information de délestage hors du système de stockage (3) lorsqu'au moins un module (11) est chargé.

5. Système (3) selon l'une quelconque des revendications précédentes, comprenant au moins un élément de liaison (21) ayant une section transversale telle que le ratio du courant de charge en fonction du nombre de modules est optimisé.

6. Ensemble de distribution (1) d'énergie électrique comprenant au moins un système de stockage d'énergie électrique (3) selon l'une quelconque des revendications précédentes, et au moins un élément de coupure principal (5) apte à isoler électriquement ledit système (3).

7. Ensemble (1) selon la revendication précédente, dans lequel le système de stockage (3) est connecté à un chargeur (7).

8. Ensemble selon la revendication précédente, dans lequel le chargeur (7) est connecté en parallèle de l'élément de coupure principal (5).

## Patentansprüche

1. Elektrisches Energiespeichersystem (3) für ein Luftfahrzeug mit mindestens einer Batterie, die eine Vielzahl von Modulen (11) von Batteriezellen umfasst, die mittels eines sekundären Unterbrechungsglieds (13), das jedem Modul (11) eigen ist, miteinander verbunden sind, so dass sie die mindestens eine Batterie bilden, wobei mindestens eines der Unterbrechungsglieder (13) ein Schütz vom Typ SSPC ist.

2. System (3) nach Anspruch 1, wobei mindestens eines der Unterbrechungsglieder (13) in dem Batteriemodul (11) angeordnet ist, das dem Unterbrechungsglied (13) eigen ist.

3. System (3) nach einem der vorhergehenden Ansprüche, wobei mindestens ein Modul (11) durch ein Sicherungselement (19) geschützt ist.

4. System (3) nach einem der vorhergehenden Ansprüche, umfassend ein Kommunikationsmittel, dass so konfiguriert ist, dass es eine Lastabwurfinformation aus dem Speichersystem (3) sendet, wenn mindestens ein Modul (11) geladen wird.

5. System (3) nach einem der vorhergehenden Ansprüche, umfassend mindestens ein Verbindungselement (21) mit einem Querschnitt, so dass das Verhältnis des Ladestroms in Abhängigkeit von der Anzahl der Module optimiert ist.

6. Verteileranordnung (1) für elektrische Energie, die mindestens ein elektrisches Energiespeichersystem (3) nach einem der vorhergehenden Ansprüche und mindestens ein Haupttrennelement (5) umfasst, das geeignet ist, das System (3) elektrisch zu isolieren.

7. Anordnung (1) nach dem vorhergehenden Anspruch, wobei das Speichersystem (3) mit einem Ladegerät (7) verbunden ist.

8. Anordnung nach dem vorhergehenden Anspruch, wobei das Ladegerät (7) parallel zum Haupttrennelement (5) verbunden ist.

## Claims

1. Electrical energy storage system (3) for an aircraft comprising at least one battery including a plurality of battery cell modules (11) connected to each other by means of a secondary disconnecting element (13) specific to each module (11) so as to form the at least one battery, at least one of the disconnecting elements (13) being an SSPC type contactor.

2. System (3) according to Claim 1, wherein at least one of the disconnecting elements (13) is arranged in the battery module (11) of said disconnecting element (13).

3. System (3) according to any one of the preceding claims, wherein at least one module (11) is protected by a fuse element (19).

4. System (3) according to any one of the preceding claims, comprising a communication means configured to send load-shedding information out of the storage system (3) when at least one module (11) is charged.

5. System (3) according to any one of the preceding claims, comprising at least one connecting element (21) having a cross-section such that the ratio of charging current to the number of modules is optimised.

6. Electrical energy distribution assembly (1) comprising at least one electrical energy storage system (3) according to any one of the preceding claims, and at least one main disconnecting element (5) capable of electrically isolating said system (3).

7. Assembly (1) according to the preceding claim, wherein the storage system (3) is connected to a charger (7).

8. Assembly according to the preceding claim, wherein the charger (7) is connected in parallel with the main disconnecting element (5).
